# EUROPEAN PATENT APPLICATION

(11) **EP 4 503 750 A1**
(43) Date of publication of application: **05.02.2025**
(21) Application number: 22934038.5
(22) Date of filing: 29.03.2022
(51) Int. Cl.: H04W 48/16, H04W 12/08

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Dehns Germany Partnerschaft mbB
(86) International application number: PCT/CN2022/083843
(87) International publication number: WO 2023/184183

(57) **Abstract**

Embodiments of the present invention provide an information processing method and apparatus, a communication device, and a storage medium. The information processing method executed by a first device may comprise: receiving a network access request of a second device, wherein the network access request comprises device information of the second device; determining, according to the device information, whether to allow the second device to join an personal Internet of Things network (PIN) to obtain a determination result; and sending a network access response to the second device according to the determination result.

## Description

### TECHNICAL FIELD

The present disclosure relates to, but is not limited to, the technical field of wireless communication, in particular to a method and an apparatus for processing information, a communication device, and a storage medium.

### BACKGROUND

A personal Internet of Things network (or personal to network, PIN) consists of personal Internet of Things network elements (or personal to network elements, PINEs) that communicate by using PIN direct connection or direct network connection, and is locally managed.

Exemplarily, the PIN is managed by using a PINE with management capability (PEMC).

The PINE may include a wearable device network, a smart home device and/or a smart office device.

In some embodiments, the PIN may further include a PINE with gateway capability (PEGC). The PEGC may access a wireless communication network, for example, the PEGC may access to 5^{th} Generation (5G) network services and may communicate with devices not included in the PIN.

In a normal case, the PIN includes at least one PEGC and at least one PEMC.

### SUMMARY

Embodiments of the present disclosure provide a method and an apparatus for processing information, a communication device, and a storage medium.

A first aspect of embodiments of the present disclosure provides a method for processing information, performed by a first device. The method includes:
receiving a network access request of a second device, in which, the network access request includes device information of the second device;
determining, according to the device information, whether to allow the second device to access a personal Internet of Things network (PIN) to obtain a determination result; and
sending a network access response to the second device according to the determination result.

A second aspect of embodiments of the present disclosure provides a method for processing information, performed by an access management function (AMF). The method includes:
acquiring PINE information that a second device accesses a PIN; in which, the PINE information at least includes a PINE identifier that the second device accesses the PIN;
sending the PINE information to a user data management (UDM);
receiving response information returned by the UDM; and
sending an update notification to a first device according to the response information.

A third aspect of embodiments of the present disclosure provides a method for processing information, performed by a UDM. The method includes:
receiving PINE information and PIN information sent by an AMF;
adding the PINE information into network data of a PIN indicated by the PIN information; and
sending response information to the AMF according to a determination whether the PINE information is successfully added into the network data of the PIN.

A fourth aspect of embodiments of the present disclosure provides an apparatus for processing information. The apparatus includes:
a first receiving module configured to receive a network access request of a second device, in which, the network access request includes device information of the second device;
a first determination module configured to determine, according to the device information, whether to allow the second device to access a personal Internet of Things network (PIN) to obtain a determination result; and
a first sending module configured to send a network access response to the second device according to the determination result.

A fifth aspect of embodiments of the present disclosure provides an apparatus for processing information. The apparatus includes:
an acquisition module configured to acquire PINE information that a second device accesses a PIN, in which, the PINE information at least includes a PINE identifier that the second device accesses the PIN;
a third sending module configured to send the PINE information to a UDM;
a fourth receiving module configured to receive response information returned by the UDM; and
a fourth sending module configured to send an update notification to a first device according to the response information.

A sixth aspect of embodiments of the present disclosure provides an apparatus for processing information. The apparatus includes:
a sixth receiving module configured to receive PINE information and PIN information sent by an AMF;
an addition module configured to add the PINE information into network data of a PIN indicated by the PIN information; and
a sixth sending module configured to send response information to the AMF according to a determination whether the PINE information is successfully added into the network data of the PIN.

A ninth aspect of embodiments of the present disclosure provides a communication device including a processor, a transceiver, a memory, and executable programs stored in the memory and capable of running on the processor, wherein the processor, when running the executable programs, executes the method for processing information provided in the above-mentioned first aspect or second aspect or third aspect.

A tenth aspect of embodiments of the present disclosure provides a computer storage medium having executable programs stored thereon; and after executing the executable programs by a process, the method for processing information provided in the above-mentioned first aspect or second aspect or third aspect is implemented.

According to the technical solution provided in embodiments of the present disclosure, if the first device serving as a PEMC of the PIN can receive network access requests sent by other devices, a network access response may be sent to the second device after it is determined that the second device is allowed to access the PIN, so that the second device simply and conveniently accesses the PIN, and the characteristic of convenience in implementation is achieved. It should be understood that the above general description and the following detailed description are only exemplary and explanatory, and cannot limit embodiments of the present disclosure.

### BRIEF DESCRIPTION OF THE DRAWINGS

The accompanying drawings herein, which are incorporated in and constitute a part of the specification, illustrate embodiments consistent with embodiments of the present disclosure and serve to explain principles of embodiments of the present disclosure together with the specification.
FIG. 1 is a structural schematic diagram illustrating a wireless communication system according to an exemplary embodiment;
FIG. 2 is a flowchart illustrating a method for processing information according to an exemplary embodiment;
FIG. 3 is a flowchart illustrating a method for processing information according to an exemplary embodiment;
FIG. 4 is a flowchart illustrating a method for processing information according to an exemplary embodiment;
FIG. 5 is a flowchart illustrating a method for processing information according to an exemplary embodiment;
FIG. 6 is a flowchart illustrating a method for processing information according to an exemplary embodiment;
FIG. 7 is a flowchart illustrating a method for processing information according to an exemplary embodiment;
FIG. 8 is a flowchart illustrating a method for processing information according to an exemplary embodiment;
FIG. 9 is a flowchart illustrating a method for processing information according to an exemplary embodiment;
FIG. 10 is a structural schematic diagram illustrating an apparatus for processing information according to an exemplary embodiment;
FIG. 11 is a structural schematic diagram illustrating an apparatus for processing information according to an exemplary embodiment;
FIG. 12 is a structural schematic diagram illustrating an apparatus for processing information according to an exemplary embodiment;
FIG. 13 is a structural schematic diagram illustrating a UE according to an exemplary embodiment; and
FIG. 14 is a structural schematic diagram illustrating a communication device according to an exemplary embodiment.

### DETAILED DESCRIPTION

Exemplary embodiments will be described in detail herein, examples of which are illustrated in the accompanying drawings. When the following description refers to the accompanying drawings, the same numbers in different accompanying drawings represent the same or similar elements unless otherwise indicated. The implementations described in the following exemplary embodiments do not represent all implementations consistent with embodiments of the present disclosure. On the contrary, they are only examples of an apparatus and a method consistent with some aspects of embodiments of the present disclosure.

Terms used in embodiments of the present disclosure are only intended to describe specific embodiments, rather than to limit the embodiments of the present disclosure. The singular forms "a/an", "the" and "said" used in the present disclosure are also intended to include a plural form unless other meanings are explicitly indicated in the context otherwise. It should be further understood that the term "and/or" used in the present disclosure refers to and includes any or all possible combinations of one or more listed relevant items.

It should be understood that, although terms such as first, second and third, etc. may be adopted in embodiments of the present disclosure to describe various kinds of information, such information should not be limited to these terms. These terms are only used for distinguishing the same type of information from each other. For example, first information may also be referred to as second information, and similarly, the second information may also be referred to as the first information without departing from the scope of embodiments of the present disclosure, which depends on the context. For example, the word "if' used herein may be explained as "upon" or "when" or "in response to determining".

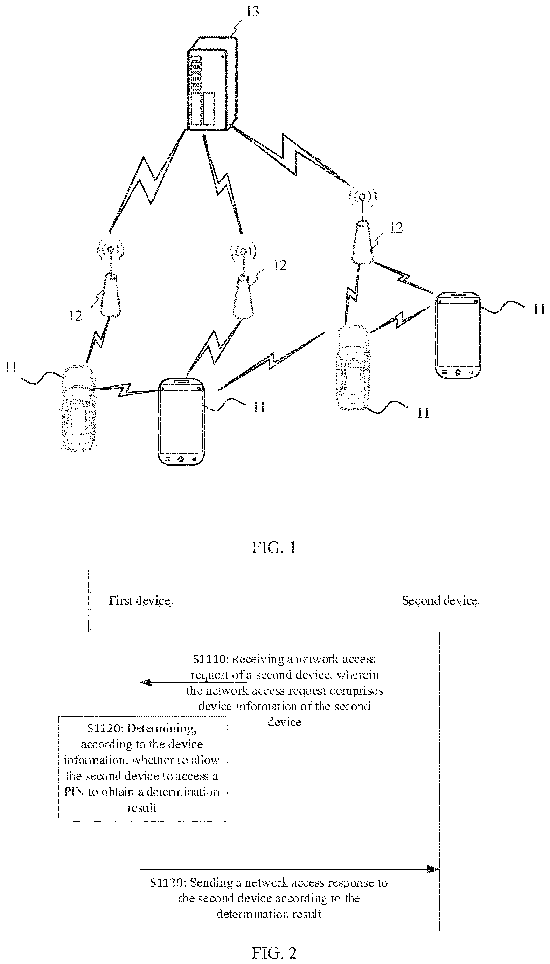

Please refer to FIG. 1, FIG. 1 shows a structural schematic diagram of a wireless communication system provided according to an embodiment of the present disclosure. As shown in FIG. 1, the wireless communication system is a communication system based on a cellular mobile communication technology, and the wireless communication system may include a plurality of UE 11 and a plurality of access devices 12.

The UE 11 may refer to a device providing voice and/or data connectivity for a user. The UE 11 may communicate with one or more core networks through a radio access network (RAN). The UE 11 may be an Internet of Things UE, such as a sensor device, a mobile phone (or referred to as "cellular" phone), and a computer with the Internet of Things UE, which may be, for example, a fixed, portable, compact, handheld, computer built-in or vehicle-mounted apparatus, such as, a station (STA), a subscriber unit, a subscriber station, a mobile station, a mobile, a remote station, an access point, a remote UE (remote terminal), an access UE (access terminal), a user apparatus (user terminal), a user agent, a user device, or a user equipment (UE). Or, the UE 11 may also be a device of an unmanned aerial vehicle. Or, the UE 11 may also be a vehicle-mounted device, such as a vehicle computer with a wireless communication function or a wireless communication device externally connected to the vehicle computer. Or, the UE 11 may also be a roadside device, such as a street lamp, a signal lamp or other roadside devices with a wireless communication function, etc.

The access devices 12 may be network side devices in the wireless communication system. The wireless communication system may be a 4^{th} generation mobile communication (4G) system also referred to as a long term evolution (LTE) system; or the wireless communication system may also be a 5G system, also referred to as a new radio (NR) system or a 5G NR system. Or the wireless communication system can also be a next generation system of the 5G system. An access network in the 5G system may also be referred to as a new generation-radio access network (NG-RAN), or an MTC system.

The access devices 12 may be evolved access devices (eNB) adopted in the 4G system. Or, the access devices 12 may also be access devices (gNB) with centrally distributed architecture adopted in the 5G system. When adopting the centrally distributed architecture, each of the access devices 12 usually includes a central unit (CU) and at least two distributed units (DU). The central unit is internally provided with protocol stacks of a packet data convergence protocol (PDCP) layer, a radio link control (RLC) layer, and a media access control (MAC) layer; and the distributed units are internally provided with protocol stacks of a physical (PHY) layer. Specific implementations of the access devices 12 are not limited in embodiments of the present disclosure.

A wireless connection may be established between each of the access devices 12 and the UE 11 through a wireless air interface. In different implementations, the wireless air interface is a wireless air interface based on a 4G standard; or the wireless air interface is a wireless air interface based on a 5G standard, for example, the wireless air interface is the NR; or the wireless air interface may also be a wireless air interface based on the more next generation mobile communication standard.

As shown in FIG. 2, an embodiment of the present disclosure provides a method for processing information, performed by a first device. The method includes following blocks.

At block S1110, a network access request of a second device is received, in which, the network access request includes device information of the second device.

At block S1120, it is determined, according to the device information, whether to allow the second device to access a personal Internet of Things network (PIN) to obtain a determination result.

At block S1130, a network access response is sent to the second device according to the determination result.

The first device may be a PEMC of the PIN. A device type of the first device may be a user equipment (UE) and/or a server.

The second device may be any device that requests to be accessed to the PIN, such as the UE, a tablet computer, a wearable device, a vehicle-mounted device, a smart home device or a smart office device.

The second device and the first device may be connected through a Bluetooth connection and/or a WiFi connection and other connections.

The device information of the second device may at least include an identifier of the second device. The identifier of the second device includes, but is not limited to, an international mobile equipment identity (IMEI), an international mobile subscriber identity (IMSI) or a medium access control address of the second device.

In other embodiments, the device information of the second device may further include capability information of the second device, etc. The second device may be any device establishing a short-distance connection with the first device; or the second device may be a device that may be added into the same local area network together with the first device.

After receiving the network access request of the second device, the first device may determine whether to allow the second device to access the PIN to obtain the determination result. The determination result may indicate allowing the second device to access the PIN or not allowing (or prohibiting) the second device to access (from accessing) the PIN.

Exemplarily, an embodiment of the present disclosure further provides a method for processing information, performed by a first device, and the method may include:
receiving a network access request of a second device; and
sending an access acceptance response to the first device when the second device is allowed to access a PIN.

Further exemplarily, an embodiment of the present disclosure further provides a method for processing information, performed by a first device. The method may include:
receiving a network access request of a second device; and
sending an access rejection response the first device when the second device is not allowed to access a PIN.

In the above-mentioned two embodiments, the network access request may include the device information of the second device. The device information of the second device is used for the first device itself or a core network device to determine that the second device is allowed to access or prohibited from accessing the PIN.

After obtaining the determination result, the first device may send a network access response indicating the determination result to the second device. For example, when the determination result indicates that the second device is allowed to access the PIN, the access acceptance response indicating that the second device is allowed to access the PIN is sent to the second device. When the determination result indicates that the second device is not allowed to access the PIN, the access rejection response indicating that the second device is not allowed to access the PIN is sent to the second device. In this way, the second device accesses the PIN simply and conveniently in the above-mentioned manner.

In some embodiments, the method further includes: broadcasting PIN information; in which, the PIN information is used for the second device to discover the PIN managed by the first device.

Exemplarily, the first device may send the PIN information of the PIN managed by itself through various broadcast channels. For example, a PIN identifier of the PIN managed by the first device is broadcast on a Bluetooth broadcast channel and/or the PIN information of the PIN managed by the first device is broadcast on a Wi-Fi broadcast channel. In this way, the second device located around the first device may know, by monitoring through the broadcast channels, which PINs are present in a current environment.

The PIN information may be any information of the PIN, but may at least include a PIN identifier. The PIN identifier may uniquely represent the PIN. In some embodiments, the PIN information may further include a network type or network capability information of the PIN, etc. Exemplarily, the PIN information may further include a name of the PIN.

When the second device sends the network access request to the first device, the PIN identifier monitored on the broadcast channels may be carried or not carried. For example, the first device only manages one PIN, at this point, if the network access request of the second device does not carry the PIN identifier, the first network device may also know the PIN that the second device requests to access. If the first device manages a plurality of PINs, at this point, if the network access request of the second device carries a plurality of PIN identifiers, the first device may know, according to the plurality of PIN identifiers carried in the network access request, the PINs that the second device requests to access.

In some embodiments, the network access request may be a network access request sent by the second device on a broadcast channel. In other embodiments, the network access request may be sent on a single wave connection established between the first device and the second device.

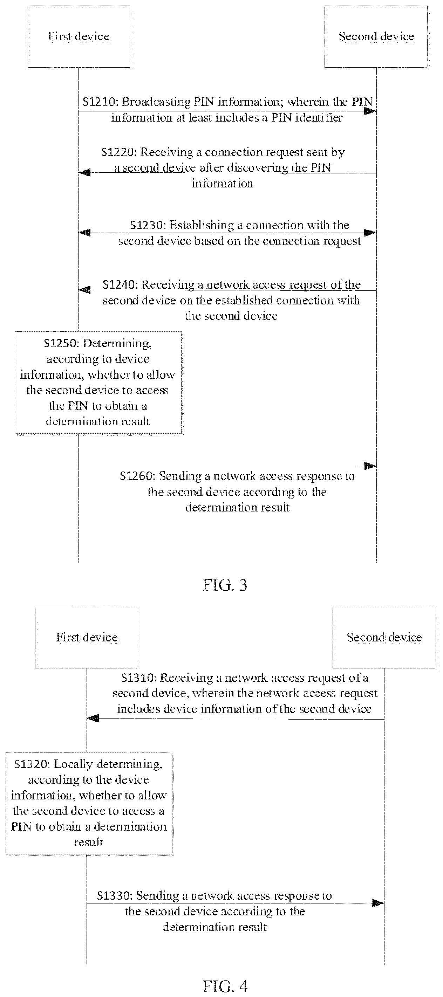

As shown in FIG. 3, an embodiment of the present disclosure provides a method for processing information, performed by a first device. The method includes following blocks.

At block S1210, PIN information is broadcast, in which, the PIN information at least includes a PIN identifier.

At block S1220, a connection request sent by a second device after discovering the PIN information is received.

At block S1230, a connection with the second device is established based on the connection request.

At block S1240, a network access request of the second device is received from the connection established with the second device.

At block S1250, it is determined, according to device information, whether to allow the second device to access a personal Internet of Things network (PIN)to obtain a determination result.

At block S1260, a network access response is sent to the second device according to the determination result.

The second device expects to access one or more PINs after monitoring the PIN information on a broadcast channel, at this point, a link with the second device may be established on an aspect of a channel type of the broadcast channel on which the PIN information is monitored. For example, the first device broadcasts the PIN information on a Bluetooth broadcast channel, a Bluetooth connection with the second device may be requested to be established on the Bluetooth channel, and then, the second device may send the network access request to the first device and receives the network access response based on the Bluetooth connection, . For another example, the first device sends the PIN information on a WiFi broadcast channel, in this way, the second device may monitor the PIN information on the WiFi broadcast channel and the connection request is receive on the WiFi broadcast channel, then, a WiFi connection with the second device is established, and the first device may receive the network access request and send the network access response to the second device on the WiFi connection.

In this way, smart access network of the second device may be realized.

In some embodiments, the device information at least includes a device identifier of the second device. In other embodiments, the device information may further include capability information, service information and/or type information of the second device, etc.

The capability information may at least indicate management and/or communication capability of the second device.

The service information may at least indicate service capability signed or supported by the second device.

The type information may at least indicate a device type of the second device, for example, the type information may be used for a network device to determine that the second device is a mobile phone, a tablet computer, a wearable device, a smart home device, a smart office device and/or a vehicle-mounted device.

Specifically, for example, the device information may further include at least one of:
a PIN identifier used for the first device to determine a PIN requested to be accessed by the second device;
service information indicating a service supported by the second device;
an optional type identifier indicating a PIN element (PINE) type that the second device has a capability to be configured;
capability information at least indicating communication capability and/or management capability of the second device; or
a name of the second device.

The PIN identifier may be a serial number of the PIN.

The service information may indicate a service supported and/or signed by the second device. For example, a printing device itself supports a printing service; and a television set supports a television broadcast service, etc.

Some PINE devices may be only used as ordinary PINEs to access the PIN and use the PIN, but do not have PIN management capability and/or PIN gateway capability. Some PINEs not only have the PIN management capability, but also have the PIN gateway capability. At this point, the optional type identifier may be configured by the second device according to capability itself, or determined by the PINE type configured according to the capability thereof and the request. Exemplarily, for a mobile phone requesting to access the PIN, the mobile phone has the PIN management capability and the PIN gateway capability simultaneously, however, the mobile phone may select to be only used as an ordinary PINE when requesting to access the PIN, and thus, the PINE type that the mobile phone itself expects to be configured may be indicated through the optional type identifier.

The capability information indicates the communication capability and/or the management capability of the second device. The communication capability may indicate whether the second device has a capability of connecting to a wireless communication network. For example, the communication capability may at least include a communication capability of connecting to a 5G network and/or a communication capability of connecting to a 4G network.

The management capability indicated by the capability information may at least include indicating whether the corresponding second device has a capability of managing the PIN.

As shown in FIG. 4, an embodiment of the present disclosure provides a method for processing information, performed by a first device. The method includes following blocks.

At block S1310, a network access request of a second device is received, in which, the network access request includes device information of the second device.

At block S 1320, it is locally determined, according to the device information, whether to allow the second device to access a PIN to obtain a determination result.

At block S1330, a network access response is sent to the second device according to the determination result.

In an embodiment, the first device may locally determine whether the second device may access the PIN. For example, after receiving the network access request of the second device, the first device determines locally, or by a remote core network device or by a remotely connected third device, according to an access network strategy of the PIN, whether to allow the second device to access the PIN.

If it is determined locally by the first device, the first device may locally determine, according to the device information of the second device, whether to allow the second device to access the PIN, and obtain the determination result.

In some embodiments, locally determining, according to the device information, whether to allow the second device to access a PIN to obtain a determination result includes:
displaying the device information of the second device, and detecting a return instruction for the device information, to determine whether to allow the second device to access the PIN.

In an embodiment, the first device has a display screen, after the network access request of the second device is received, the received device information of the second device is directly displayed on the display screen. Exemplarily, the first device displays the device information of the second device in a manner of a dialog box, and displays inquiry information whether to allow the second device to access the PIN, detects a user operation acting on the dialog box, and obtains a return instruction based on the user operation. If the return instruction is an allowing instruction, it is determined that the second device is allowed to access the PIN; and if the return instruction is a canceling instruction, it is determined that the second device is not allowed to access the PIN.

In some cases, the first device itself does not include the display screen, but a control device for the first device or a third device connected to the first device has the display screen, then, the device information may be provided to the third device, and the third device displays the device information and detects the return instruction to determine whether to allow the second device to access the PIN.

In an embodiment, locally determining, according to the device information, whether to allow the second device to access the PIN to obtain the determination result includes:
determining that the second device is allowed to access the PIN in a case that the device information of the second device is on a first list; and
determining that the second device is not allowed to access the PIN in a case that the device information of the second device is outside the first list.

In some embodiments, the first list may be a white list, and the white list may include IMEIs, IMSIs or MAC addresses, etc. of device that is allowed to access, and may also be a used IP address, etc. In another embodiment, the first list may further include a minimum IP address and a maximum IP address of an IP address range that is allowed to access the PIN.

By configuring the white list, the first device may automatically determine whether to allow the second device to access the PIN. For example, the first device may at least automatically determine which second devices are allowed to access the PIN.

In another embodiment, locally determining, according to the device information, whether to allow the second device to access the PIN to obtain the determination result includes:
determining that the second device is prohibited from accessing the PIN in a case that the device information of the second device is on a second list; and
determining that the second device is allowed to access the PIN in a case that the device information of the second device is outside the second list.

In other embodiments, the second list may be a black list, and the black list may include IMEIs, IMSIs or MAC addresses, etc. of devices that is prohibited from accessing, and may also be a used IP address, etc. In another embodiment, the second list may further include a minimum IP address and a maximum IP address of an IP address range prohibiting from accessing the PIN.

By configuring the black list, the first device may automatically determine whether to allow the second device to access the PIN. For example, the first device may at least automatically determine, according to the black list, which second devices are prohibited from accessing the PIN.

In another embodiment, locally determining, according to the device information, whether to allow the second device to access the PIN to obtain the determination result includes:
determining that the second device is allowed to access the PIN in case that the device information of the second device is on a first list, it is;
determining that the second device is prohibited from accessing the PIN in a case that the device information of the second device is on a second list; and
in a case that the device information of the second device is not on both the first list and the second list, displaying the device information of the second device, and detecting a return instruction for the device information, to determine whether to allow the second device to access the PIN.

If the first device is configured with the first list and the second list, the first device may determine, according to the first list and/or the second list, whether to allow the second device to access the PIN. At this point, for a second device which is neither included in the first list nor the second list, it may be determined, according to the display of the device information and the return instruction input by a user, whether to allow the second device to access the PIN, and thus, it is ensured the device accessing the PIN is precisely controlled.

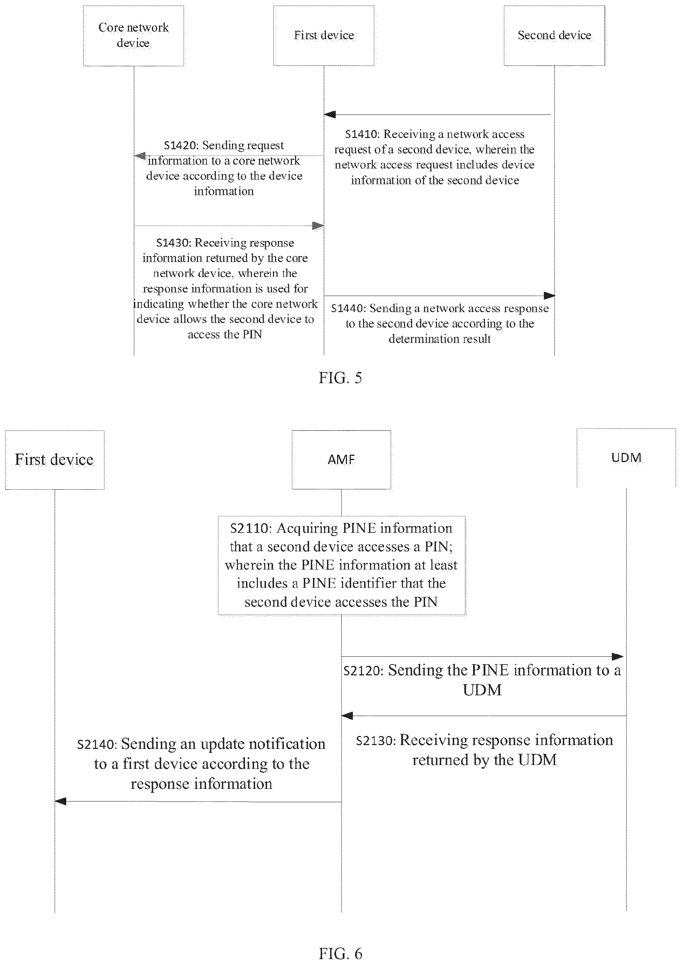

As shown in FIG. 5, an embodiment of the present disclosure provides a method for processing information, performed by a first device. The method includes following blocks.

At block S1410, a network access request of a second device is received, in which, the network access request includes device information of the second device.

At block S1420, request information is sent to a core network device according to the device information.

At block S1430, response information returned by the core network device is received, in which, the response information is used for indicating whether the core network device allows the second device to access a PIN, and the response information includes a determination result.

At block S1440 a network access response is sent to the second device according to the determination result.

If the core network device determines whether to allow the second device to access the PIN, the first device may send the device information of the second device and a PIN identifier in PIN information to the core network device together, so that the core network device determines whether to allow the second device to access the PIN.

Exemplarily, an AMF and/or a UDM of the core network device determines whether to allow the second device to access the PIN.

In a word, there are a plurality of methods for the first device to acquire the determination result, which may be determined by the first device or remotely determined by the core network device.

In some embodiments, the method further includes:
assigning PINE information to the second device in a case that the first device determines that the second device is allowed to access the PIN;
   or,
assigning the PINE information to the second device in a case that response information that the core network device determines that the second device is allowed to access the PIN is received;
   or,
receiving PINE information assigned to the second device by the core network device;
in which the PINE information at least includes a PINE identifier.

If the first device itself determines whether to allow the second device to access the PIN, that is, the first device itself determines (locally determines) whether to allow the second device to access the PIN, the first device may assign the PINE information by itself (or locally) for the second device to access the PIN when allowing the second device to access the PIN. The PINE information may at least include the PINE identifier.

In some embodiments, determining whether to allow the second device to access the PIN is performed by the core network device. In this way, the first device may receive the response information from the core network device, and the response information may indicate whether the corresponding second device is allowed to access the PIN. The first device may assign the PINE information to the second device according to the response information of the core network device when the response information indicates that the second device is allowed to access the PIN.

In some embodiments, the PINE information of the second device allowed to access the PIN is assigned by the core network device. For example, the core network device determines whether to allow the second device to access the PIN, after allowing the second device to access the PIN, the core network device automatically assign the PINE information to the second device. Or, after verifying that the second device is allowed to access the PIN, the first device sends a notification that the second device is allowed to access the PIN to the core network device, and the core network device assigns the PINE information to the second device after receiving the notification. In these two situations, the first device may receive the PINE information from the core network device.

In some embodiments, the PINE information further includes at least one of:
an authorization type identifier indicating a PINE type that the second device is authorized;
validity time information indicating a duration that the second device is allowed to access the PIN;
role type information indicating that the second device is a member formally accessing the PIN or a visitor temporarily accessing the PIN;
permission information indicating a service permission by which the second device uses the PIN;
capability information indicating PIN capability of the second device;
a name of the second device; or
service information indicating a service supported by the second device.

Exemplarily, the PINE type includes at least one of
a PEMC indicating that the second device is authorized with PIN network management capability;
a PEGC indicating that the second device is authorized with PIN gateway capability;
the PEMC and the PEGC indicating that the second device is authorized with the PIN network management capability and the PIN gateway capability; or
a PINE indicating that the second device is authorized to use the PIN.

The validity time information may be duration information directly indicating a duration that the second device accesses the PIN. The validity time information may further include information indicating beginning and ending time points at which the second device is allowed to access the PIN.

For example, the role type information is equivalent to determine whether the current device accesses as a temporary visitor or a formal member, and a role type of the temporary visitor or the formal member may be determined according to the first list and/or the second list and/or the return instruction obtained after the device information is displayed.

In an embodiment, if the role type information indicates that the second device is the temporary visitor accessing the PIN, the PINE information may further include the validity time information.

In another embodiment, if the second device leaves from the PIN for a preset duration after accessing the PIN this time, it is considered that the second device needs to re-authenticated if it needs to access the PIN again. In such a manner, after the second device serving as the temporary visitor accesses the PIN, the validity duration is a duration that the second device accesses the PIN once.

There may be a plurality of devices accessing the PIN, one device may have at least one service capability, and the different devices may have different service capabilities. The service capabilities of the devices accessing the PIN all belong to the service capabilities of the PIN. Some second devices are only allowed to use parts of the service capabilities of the PIN after accessing the PIN; and some second devices are allowed to use all the service capabilities of the PIN after accessing the PIN.

For example, some second devices are only allowed to use the communication capability of the PEGC in the PIN after accessing the PIN. For example, after a printing device or a smart cleaning device or a temperature adjusting device accesses the PIN, the PIN has printing capability, cleaning capability and temperature adjusting capability. At the moment, some devices are authorized to use all the service capabilities in the PIN, but some devices are only authorized to use the printing capability, the cleaning capability and/or the temperature adjusting capability, etc.

In some embodiments, sending the network access response to the second device according to the determination result includes:
sending the network access response carrying the PINE information of the second device to the second device.

The PINE information of the second device may at least include a PINE identifier. The PINE information is carried in the network access response so as to be sent to the second device, and the second device may at least know its own identifier in the PIN, and may know, according to the authorization type identifier, the validity time information and/or the service information, etc., how to use the PIN by itself.

In some embodiments, the method further includes:
sending an update request to the core network device, in which, the update request includes the PINE information of the second device and the PIN information, and the PINE information is used for updating network data of the PIN.

The network data may be recorded in the core network device. Exemplarily, the network data may be recorded in a UDM of a core network. The network data may be any data for describing the PIN. Exemplarily, the network data of the PIN includes, but is not limited to, a PIN identifier and attribute data of the PIN.

The attribute data includes, but is not limited to, at least one of:
an identifier of a network management device of the PIN;
an identifier of a gateway device of the PIN;
a number of PINEs included in the PIN;
respective PINE information included in the PIN, in which, the PINE information includes, but is not limited to, a PINE identifier. Exemplarily, the PINE information may further include, but is not limited to, at least one of:
   an authorization type identifier indicating a PINE type that the second device is authorized;
   validity time information indicating a duration that the second device is allowed to access the PIN;
   role type information indicating that the second device is a member formally accessing the PIN or a visitor temporarily accessing the PIN;
   permission information indicating a service permission by which the second device uses the PIN;
   capability information indicating PIN capability of the second device;
   a name of the second device; or
   service information indicating a service supported by the second device.

Exemplarily, the first device may send the update request to the core network device before sending the network access response to the second device, or the first device may send the update request to the core network device when or after sending the network access response to the second device.

In some embodiments, the method further includes:
receiving an update notification returned by the core network device.

If the first device sends the update request to the core network device, the first device may receive the update notification returned by the core network device. The update notification indicates whether network information of the PIN is successfully updated.

In an embodiment, sending the network access response to the second device according to the determination result includes:
sending the network access response to the second device according to the update notification and the determination result.

If the update request is sent before the network access response is sent to the second device, the first device may determine, according to the determination result and the update notification, an information content of the network access response sent to the second device.

Exemplarily, sending the network access response to the second device according to the update notification and the determination result includes at least one of:
sending an access acceptance response to the second device in a case that the second device is allowed to access the PIN and the update notification is an update success notification;
sending an access rejection response to the second device in a case that the second device is allowed to access the PIN and the update notification is an update failure notification; or
sending the access acceptance response to the second device in a case that the second device is allowed to access the PIN and the update notification is the update failure notification.

The update success notification may indicate that the PINE information of the second device is successfully added into the network data of the PIN.

The update failure notification may indicate that the PINE information of the second device fails to be added into the network data of the PIN.

After receiving the update success notification, the first device may send the access acceptance response allowing the second device to access the PIN to the second device. After the access acceptance response is received by the second device, it may be considered that the second device itself successfully accesses the PIN.

In an embodiment, if the update notification is the update success notification, the network access response sent to the second device may include the PINE information.

In another embodiment, if the update notification is the update failure notification, it is proven that the PINE information of the second device is not added into the network data of the PIN for the moment. At this point, the first device may return the access rejection response or send a network access response indicating a temporary hold on accessing the network to the second device, or temporarily delay sending the network access response to the second device.

In another embodiment, since the second device accesses a PIN on a place where the first device is located, if the network data of the PIN in the core network device is not successfully updated, the local use of the PIN by the second device is not affected, in view of such a situation, the first device still sends the access acceptance response to the second device when receiving the update failure notification, and the access acceptance response may include the PINE information of the second device. Further, if the update failure notification is received, the first device resends the update request including the PINE information or device information of the second device to the core network device when a resending time point is reached later, so that the PINE information of the second device may be successfully added into the network information of the PIN.

In some embodiments, sending the network access response to the second device according to the update notification and the determination result includes:
in a case that the update notification is the update failure notification, determining, according to the determination result and a PINE type that the second device is configured after accessing the PIN, that the access acceptance response or the access rejection response is sent to the second device.

Exemplarily, in a case that the update notification is the update failure notification, determining, according to the determination result and the PINE type that the second device is configured after accessing the PIN, that the access acceptance response or the access rejection response is sent to the second device includes:
sending the access rejection response to the second device in a case that the update notification is the update failure notification, the determination result indicates that the second device is allowed to access the PIN, and the second device accessing the PIN is to be configured as a PEGC;
   or,
sending the access acceptance response to the second device in a case that the update notification is the update failure notification, the determination result indicates that the second device is allowed to access the PIN, and the second device accessing the PIN is to be configured as an ordinary PINE using the PIN;
   or,
sending the access rejection response to the second device in a case that the update notification is the update failure notification, the determination result indicates that the second device is allowed to access the PIN, and the second device accessing the PIN is to be configured as a PEMC using the PIN.

Of course, the above descriptions are only examples, and specific implementation processes are not limited to the above-mentioned examples.

In some embodiments, sending the network access response to the second device according to the determination result includes at least one of:
in a case that the determination result indicates that the second device is allowed to access the PIN, an access acceptance response is sent to the second network device after the determination result is generated; and
in a case that the determination result indicates that the second device is not allowed to access the PIN, an access rejection response is sent to the second network device after the determination result is generated.

If the first device determines locally (by itself) whether to allow the second device to access the PIN and determines that the second device is rejected to access the PIN, it is unnecessary to send the update request to the core network device.

If the core network device determines whether to allow the second device to access the PIN, the first device may send the access rejection response to the second device when receiving an indication from the core network device that the second device is rejected to access the PIN.

The network access response further includes the PIN information.

If the network access response further carries the PIN information, it may be told which PIN the second device successfully accesses currently or which PIN the second device is rejected.

In an embodiment of the present disclosure, the PIN information carried by the network access response may at least include an PIN identifier.

As shown in FIG. 6, an embodiment of the present disclosure provides a method for processing information, performed by an AMF in a core network device. The method includes following blocks.

At block S2110, PINE information that a second device accesses a PIN is acquired; in which, the PINE information at least includes a PINE identifier that the second device accesses the PIN.

At block S2120, the PINE information is sent to a user data management (UDM).

At block S2130, response information returned by the UDM is received.

At block S2140, an update notification is sent to a first device according to the response information.

The method for processing information may be processed by the AMF. The AMF firstly acquires the PINE information of the second device newly requesting to access the PIN. The PINE information may be generated by a core network device or a PEMC of the PIN.

After acquiring the PINE information, the AMF may send the PINE information to the UDM, by which it is convenient for the UDM to add the PINE information to network data of the corresponding PIN.

The PINE information acquired in S2110 may at least include a PINE identifier.

In an embodiment, in addition to the PINE identifier, the PINE information may further include at least one of
an authorization type identifier indicating a PINE type that the second device is authorized;
validity time information indicating a duration that the second device is allowed to access the PIN;
role type information indicating that the second device is a member formally accessing the PIN or a visitor temporarily accessing the PIN;
permission information indicating a service permission by which the second device uses the PIN;
capability information indicating PIN capability of the second device;
a name of the second device; or
service information indicating a service supported by the second device.

In some embodiments, the S2120 may include:
sending the PINE information and PIN information to the UDM, in which the PIN information at least includes a PIN identifier, and the PIN identifier may be used for the UDM to uniquely determine the PIN. The PINE information may at least include a PINE identifier. In some embodiments, the PINE information may further include PINE information other than the PINE identifier, such as capability information of the corresponding second device, etc.

In some embodiments, the UDM may return the response information to the AMF according to a determination whether the PINE information is successfully added into network information of the PIN. At the moment, the AMF may send, according to the response information, an update notification indicating whether the network data of the PIN is successfully updated to the first device.

Exemplarily, the S2140 may include: in a case that the response information indicates that the update is successful, sending an update success notification to the first device; and in a case that the response information indicates that the update fails, sending an update failure notification to the first device.

In some embodiments, the PINE information may be carried in any information between the AMF and the UDM so as to be sent to the UDM. Exemplarily, the PINE information may be carried in a specific registration request (such as a Nudm-UECM-Registration Request). If the PINE information is carried in the registration request so as to be sent to the UDM, the PINE information may be returned to the AMF through a registration response (Nudm-UECM-Registration Response).

In some embodiments, the S2110 includes:
receiving an update request sent by the first device, in which, the update request includes the PINE information;
   or,
determining, according to device information of the second device, whether to allow the second device to access the PIN, and assigning the PINE information to the second device in a case that the second device is allowed to access the PIN; in which the device information of the second device may be forwarded to the AMF by the first device; or directly received from the second device by the AMF;
   or,
assigning the PINE information to the second device after receiving an indication that the first device allows the second device to access the PIN.

That is, whether the second device is allowed to access the PIN may be determined by the AMF or the first device. The PINE information of the second device allowed to access the PIN may be assigned by the first device or the AMF.

If the PINE information of the second device is assigned by the AMF, the AMF may send the PINE information to the UDM under a condition that the PINE information is returned to the first device or is not returned to the first device after completing assignment of the PINE information of the second device.

If the PINE information of the second device is assigned by the first device, the AMF may receive the update request, and the update request may include the PINE information of the second device. In this way, the AMF sends the PINE information to the UDM after receiving the PINE information.

In some embodiments, the method further includes:
receiving request information sent by the first device, in which, the request information includes the device information of the second device requesting to access the PIN;
determining, according to the device information of the second device, whether to allow the second device to access the PIN; and
sending response information to the first device according to a determination result of whether to allow the second device to access the PIN.

If the AMF determines whether the second device is allowed to access the PIN, the second device may receive the information sent by the first device, and the request information may at least include the device information of the second device. The device information is used for the AMF to determine whether to allow the second device to access the PIN. Optionally, the request information may further include the PIN information, by which it is convenient for the AMF to know, based on the current request information, the PIN that the second device requests to access currently.

If the AMF determines that the second device is allowed to access the PIN, response information indicating that the second device is allowed to access the PIN is sent to the first device; and if the AMF determines that the second device is not allowed to access the PIN, response information indicating that the second device is not allowed to access the PIN is sent to the first device.

In some embodiments, the response information is used for the first device to assign the PINE information to the second device when the second device is allowed to access the PIN, or the response information is used for the first device to determine whether to allow the second device to access the PIN.

If the PINE information of the second device is assigned by the AMF and the core network device determines that the second device is allowed to access the PIN, the response information further includes the PINE information of the second device.

If the PINE information of the second device is assigned by the AMF and the core network device determines that the second device is not allowed to access the PIN, the response information may directly indicate that the second device is not allowed to access the PIN.

In an embodiment, sending the update notification to the first device according to the response information includes at least one of:
sending an update success notification to the first device in a case that the response information indicates that PIN information is successfully added into network data of the PIN; or
sending an update failure notification to the first device in a case that the response information indicates that the PIN information fails to be added into the network data of the PIN.

The update success notification or the update failure notification is used for the first device to determine a content of a network access response sent to the second device.

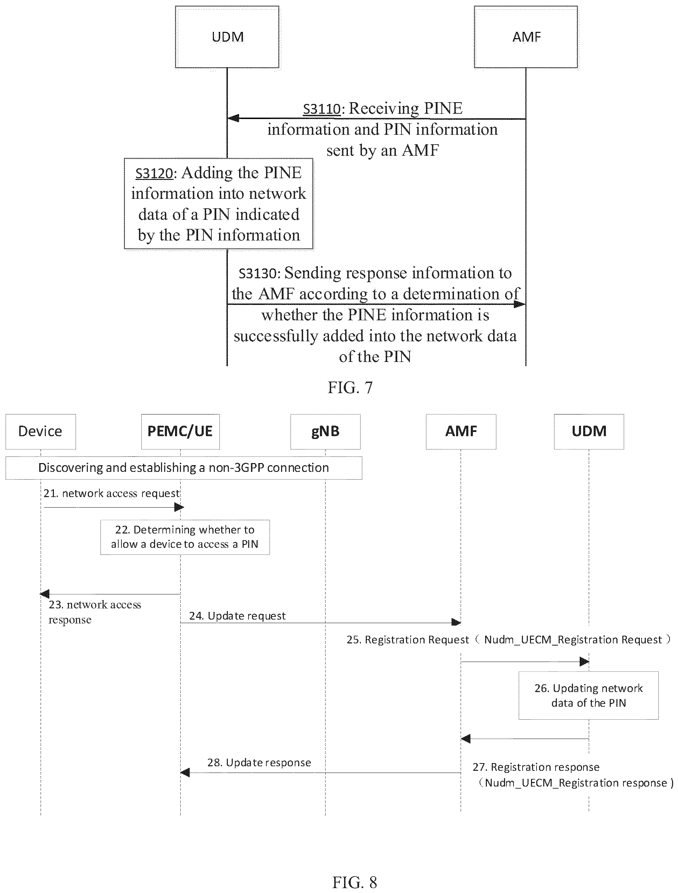

As shown in FIG. 7, an embodiment of the present disclosure provides a method for processing information, performed by a UDM in a core network device. The method includes following blocks.

At block S3110, PINE information and PIN information sent by an AMF are received.

At block S3120, the PINE information is added into network data of a PIN indicated by the PIN information.

At block S3130, response information is sent to the AMF according to a determination whether the PINE information is successfully added into the network data of the PIN.

In an embodiment of the present disclosure, the method for processing information may be performed by the UDM.

The PIN information and the PINE information may be sent by the AMF through one piece of information or different pieces of information.

After receiving the PINE information and the PIN information, the UDM may position a location where the network data of the PIN indicated by the PIN information is stored by itself according to the PIN information, and then add the PINE information behind the network data.

When adding the PINE information into the network data of the PIN, the UDM may need to perform security verification of the PINE information with considering data security. The security verification includes, but is not limited to, decryption and integrity verification of the PINE information.

The PINE information is added into the network data of the PIN after passing the security verification, or else, it may not be added into the network data of the PIN. If the PINE information does not pass the security verification, it may be considered that the PINE information fails to be added into the network data of the PIN.

In a word, causes resulting in the UDM failing to add the PINE information into the network data of the PIN may further include network fluctuation, etc. In a word, after it is determined whether the UDM successfully adds the PINE information into the network data of the PIN, the UDM may send the response information to the AMF according to the determination of whether the PINE information is added into the network data of the PIN.

If the UDM successfully adds the PINE information into the PIN, a control device for the PIN may inquire the current network data of the PIN through the UDM, so that it is convenient to perform remote control according to the current network data of the PIN. In some embodiments, sending the response information to the AMF according to the determination of whether the PINE information is added into the network data of the PIN includes at least one of:
sending success information to the AMF in a case that the PINE information is successfully added into the network data of the PIN; or
sending failure information to the AMF in a case that the PINE information fails to be added into the network data of the PIN.

As shown in FIG. 8, an embodiment of the present disclosure provides a method for processing information. The method may include that:
a PEMC broadcasts PIN information of a PIN, for example, the PIN information may include a PIN ID and/or a name of the PIN.

A device expecting to access the PIN discovers and selects a target PEMC, and a connection is established between the device and the PEMC. At the moment, the connection between the device and the PEMC may be any non-3GPP connection shown in FIG. 8.
21. A PIN request (one of the above-mentioned network access request) is sent to the PEMC through the established connection with the PEMC, the PIN request may include a PIN ID, a device ID, a PINE type, capability information, a name of a device, etc. The PINE type may be a PINE type that a device requesting to access the PIN expects to be configured or a PINE type that can be configured. The network access request may include a device ID, capability information of a device, and expected time information that the device expects to access the PIN addition to the PIN ID. The expected time information indicates a duration or a period of time that the device accesses the PIN. The expected time information may be used for determining the above-mentioned validity time information.
22. The PEMC determines to accept the PIN request. How to determine to accept the request depends on implementation, which will not be specifically limited in embodiments of the present disclosure. The PEMC allocates a PINE ID for the device. The PEMC determines a role, i.e., the PINE type, that the device is configured in the PIN.
23. The PEMC sends an access PIN response to the device (the PIN response may be one of the above-mentioned network access responses), the PIN response at least includes information indicating to accept or refuse access network and the PIN information. Or the PIN response may at least include information indicating to accept or refuse access network, PIN information and PINE information.

The PIN information includes, but is not limited to, at least one of:
a PIN ID, a name of a PIN, PIN service information, validity time information, and other PIN information.

The PINE information may include, but is not limited to, at least one of: a PINE ID, a name of a PINE, a PINE type, capability information, and validity time information, etc.

24. The PEMC sends a PIN update request to an AMF through a gNB, and the update request may include a UE ID, PIN information and PINE information. The PINE information and the PIN information may be carried in an information container to be sent to the AMF, or carried in an information element (IE).

In an embodiment, the PINE information and the PIN information may be carried in the same information container or the same IE, or carried in different information containers or IEs.

The PIN information may at least include a PIN ID. The PIN ID indicates a PIN that the device requests to access.

The PINE information may include a PINE ID, a name of a PINE, capability information, service information and/or validity time information, etc.
25. The AMF sends a Nudm_UECM_ Registration Request (registration request) to a UDM so as to update network data of the PIN, for example, the PINE information received in step 24 is added into the network data of the PIN.
26. The UDM updates the PIN information to be the network data of the PIN.
27. The UDM sends a registration response (such as a Nudm-UECM-Registration response) to the AMF.
28. The AMF sends an update response (i.e., one of the update notifications provided in the above-mentioned embodiments) to the PEMC, wherein the update notification indicates that the device is accepted to access the PIN or refused to access the PIN.

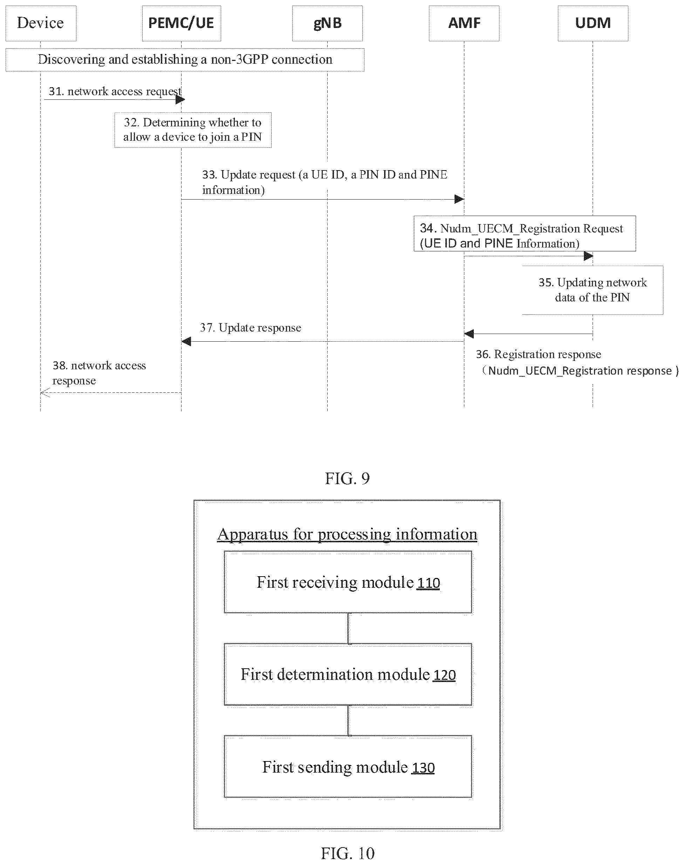

As shown in FIG. 9, an embodiment of the present disclosure provides a method for processing information. The method may include that:
a PEMC broadcasts PIN information of a PIN, for example, the PIN information may include a PIN ID and/or a name of the PIN.

A device expecting to access the PIN discovers and selects a target PEMC, and a connection is established between the device and the PEMC.
31. A PIN request (one of the above-mentioned network access requests) is sent to the PEMC through the established connection with the PEMC, the PIN request may include a PIN ID, a device ID, a PINE type, capability information, and/or a name of a device, etc. The PINE type may be a PINE type that a device requesting to access the PIN expects to be configured or a PINE type that can be configured. In an embodiment, the network access request may further include expected time information that the device expects to access the PIN. The expected time information indicates a duration or a period of time that the device accesses the PIN. The expected time information may be used for determining the above-mentioned validity time information.
32. The PEMC determines to accept the PIN request. How to determine to accept the request depends on the implementation of the PEMC, which will not be specifically limited in embodiments of the present disclosure. The PEMC allocates a PINE ID for the device. The PEMC determines a role, i.e., the PINE type, that the device is configured in the PIN.
33. The PEMC sends a PIN update request to an AMF through a gNB, and the update request may include a UE ID, PIN information and PINE information. The PINE information and the PIN information may be carried in an information container to be sent to the AMF, or carried in an information element (IE).

In an embodiment, the PINE information and the PIN information may be carried in the same information container or the same IE, or carried in different information containers or IEs.

The PIN information may at least include a PIN ID. The PIN ID indicates a PIN that the device requests to access.

The PINE information may include a PINE ID, a name of a PINE, capability information, service information and/or validity time information, etc.
34. The AMF sends a Nudm_UECM_ Registration Request (registration request) to a UDM so as to update network data of the PIN, for example, the PINE information received in step 33 is added into the network data of the PIN.
35. The UDM updates the PIN information to be the network data of the PIN.
36. The UDM sends a registration response (such as a Nudm-UECM-Registration response) to the AMF.
37. The AMF sends an update response (i.e., one of the update notifications provided in the above-mentioned embodiments) to the PEMC, wherein the update notification indicates that the device is accepted to access the PIN or refused to access the PIN.
38. The PEMC sends an access PIN response (i.e., one of the above-mentioned network access responses) to the device, and sends a result after the PEMC updates the PINE information to the UDM.

The PIN response at least includes information indicating to accept or refuse access network and PIN information. Or the PIN response may at least include information indicating to accept or refuse access network, PIN information and PINE information.

The PIN information includes, but is not limited to, at least one of:
a PIN ID, a name of a PIN, PIN service information, validity time information, and other PIN information.

The PINE information may include, but is not limited to, at least one of: a PINE ID, a name of a PINE, a PINE type, capability information, and validity time information, etc.

As shown in FIG. 10, an embodiment of the present disclosure provides an apparatus for processing information. The apparatus includes:
a first receiving module 110 configured to receive a network access request of a second device, wherein the network access request includes device information of the second device;
a first determination module 120 configured to determine, according to the device information, whether to allow the second device to access a personal Internet of Things network (PIN)to obtain a determination result; and
a first sending module 130 configured to send a network access response to the second device according to the determination result. The information processing apparatus may be included in a first device.

In some embodiments, the first receiving module 110, the first determination module 120 and the first sending module 130 may be program modules; and after the program modules are executed by a processor, the above-mentioned operations may be implemented.

In other embodiments, the first receiving module 110, the first determination module 120 and the first sending module 130 may be software and hardware combined modules; the software and hardware combined modules include, but are not limited to programmable arrays; and the programmable arrays include, but are not limited to field programmable arrays and/or complex programmable arrays.

In further embodiments, the first receiving module 110, the first determination module 120 and the first sending module 130 may be pure hardware modules; and the pure hardware modules include, but are not limited to application-specific integrated circuits.

In some embodiments, the apparatus further includes:
a broadcasting module configured to broadcast PIN information; wherein the PIN information is used for the second device to discover the PIN managed by the first device.

In some embodiments, the apparatus further includes:
a connecting module configured to receive a connection request sent by the second device after discovering the PIN information;
an establishing module configured to establish a connection with the second device based on the connection request; and
the first receiving module 110 configured to receive the network access request of the second device on the connection established with the second device.

In some embodiments, the device information at least includes a device identifier of the second device.

In some embodiments, the device information further includes at least one of:
a PIN identifier used for the first device to determine a PIN requested to be accessed by the second device;
service information indicating a service supported by the second device;
an optional type identifier indicating a PINE type of a PIN as which the second device has a capability to be configured;
capability information at least indicating communication capability and/or management capability of the second device; or
a name of the second device.

In some embodiments, the first determination module 120 is configured to locally determine, according to the device information, whether to allow the second device to access the PIN to obtain the determination result;
or,
send request information to a core network device according to the device information, and receive response information returned by the core network device, wherein the response information is used for indicating whether the core network device allows the second device to access the PIN.

In some embodiments, the first determination module 120 is configured to perform at least one of
displaying the device information of the second device, and detecting a return instruction for the device information, and determining whether to allow the second device to access the PIN according to the return instruction;
determining that the second device is allowed to access the PIN in a case that the device information of the second device is on a first list;
determining that the second device is not allowed to access the PIN in a case that the device information of the second device is outside the first list;
determining that the second device is prohibited from accessing the PIN in a case that the device information of the second device is on a second list; or
determining that the second device is allowed to access the PIN in a case that the device information of the second device outside the second list.

In some embodiments, the apparatus further includes:
a first assignment module configured to assign PINE information to the second device in a case that the first device determines that the second device is allowed to access the PIN;
   or,
a second assignment module configured to assign PINE information to the second device in a case that the response information that the core network device determines that the second device is allowed to access the PIN is received;
   or,
a second receiving module configured to receive PINE information assigned to the second device by the core network device;
wherein the PINE information at least includes a PINE identifier.

In some embodiments, the PINE information further includes at least one of:
an authorization type identifier indicating a PINE type that the second device is authorized;
validity time information indicating a duration that the second device is allowed to access the PIN;
role type information indicating that the second device is a member formally accessing the PIN or a visitor temporarily accessing the PIN;
permission information indicating a service permission by which the second device uses the PIN;
capability information indicating PIN capability of the second device;
a name of the second device; or
service information indicating a service supported by the second device.

In some embodiments, the PINE type includes at least one of:
a PEMC indicating that the second device is authorized with PIN network management capability;
a PEGC indicating that the second device is authorized with PIN gateway capability;
the PEMC and the PEGC indicating that the second device is authorized with the PIN network management capability and the PIN gateway capability; or
a PINE indicating that the second device is authorized to use the PIN.

In some embodiments, the first sending module 130 is configured to send the network access response carrying the PINE information of the second device to the second device.

In some embodiments, the apparatus further includes:
a second sending module configured to send an update request to the core network device, wherein the update request includes: the PINE information of the second device and the PIN information; and the PINE information is used for updating network data of the PIN.

In some embodiments, the apparatus further includes:
a third receiving module configured to receive an update notification returned by the core network device.

In some embodiments, the first sending module 130 is configured to send the network access response to the second device according to the update notification and the determination result.

In some embodiments, the first determination module 120 is configured to perform at least one of
sending an access acceptance response to the second device in a case that the second device is allowed to access the PIN and the update notification is an update success notification;
sending an access rejection response to the second device in a case that the second device is allowed to access the PIN and the update notification is an update failure notification; and
sending the access acceptance response to the second device in a case that the second device is allowed to access the PIN and the update notification is the update failure notification.

In some embodiments, the first sending module 130 is configured to perform at least one of:
in a case that the determination result indicates that the second device is allowed to access the PIN, sending an access acceptance response to the second network device after the determination result is generated; or
in a case that the determination result indicates that the second device is not allowed to access the PIN, sending an access rejection response to the second network device after the determination result is generated.

In some embodiments, the network access response further includes the PIN information.

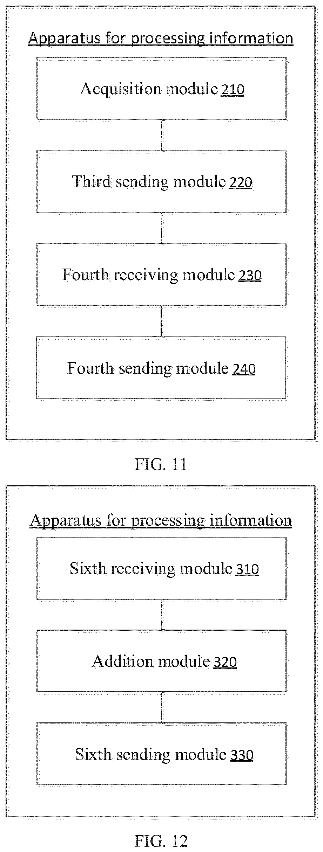

As shown in FIG. 11, an embodiment of the present disclosure provides an apparatus for processing information. The apparatus includes:
an acquisition module 210 configured to acquire PINE information that a second device accesses a PIN; wherein the PINE information at least includes a PINE identifier that the second device accesses the PIN;
a third sending module 220 configured to send the PINE information to a user data management (UDM);
a fourth receiving module 230 configured to receive response information returned by the UDM; and
a fourth sending module 240 configured to send an update notification to a first device according to the response information.

The information processing apparatus may be included in an AMF.

In some embodiments, the acquisition module 210, the third sending module 220, the fourth receiving module 230 and the fourth sending module 240 are program modules; and after the program modules are executed by a processor, the above-mentioned operations may be implemented.

In other embodiments, the acquisition module 210, the third sending module 220, the fourth receiving module 230 and the fourth sending module 240 may be software and hardware combined modules; the software and hardware combined modules include, but are not limited to programmable arrays; and the programmable arrays include, but are not limited to field programmable arrays and/or complex programmable arrays.

In some further embodiments, the acquisition module 210, the third sending module 220, the fourth receiving module 230 and the fourth sending module 240 may be pure hardware modules; and the pure hardware modules include, but are not limited to application-specific integrated circuits.

In some embodiments, the acquisition module 210 is configured to receive an update request sent by the first device, wherein the update request includes the PINE information; or, determine, according to device information of the second device, whether to allow the second device to access the PIN, and assign the PINE information to the second device in a case that the second device is allowed to access the PIN.

In some embodiments, the apparatus further includes:
a fifth receiving module configured to receive request information sent by the first device, wherein the request information includes the device information of the second device requesting to access the PIN;
a second determination module configured to determine, according to the device information of the second device, whether to allow the second device to access the PIN; and
the fourth sending module 240 further configured to send response information to the first device according to a determination result of whether to allow the second device to access the PIN, wherein the response information is used for the first device to assign the PINE information to the second device when the second device is allowed to access the PIN.

In some embodiments, the fourth sending module is configured to perform at least one of:
sending an update success notification to the first device in a case that the response information indicates that PIN information is successfully added into network data of the PIN; and
sending an update failure notification to the first device in a case that the response information indicates that the PIN information fails to be added into the network data of the PIN.

In some embodiments, the PINE information further includes:
capability information of the second device, wherein the capability information indicates communication capability and/or management capability of the second device.

As shown in FIG. 12, an embodiment of the present disclosure provides an apparatus for processing information. The apparatus includes:
a sixth receiving module 310 configured to receive PIN element (PINE) information and personal Internet of Things network (PIN)information sent by an access management function (AMF);
an addition module 320 configured to add the PINE information into network data of a PIN indicated by the PIN information; and
a sixth sending module 330 configured to send response information to the AMF according to a determination of whether the PINE information is successfully added into the network data of the PIN.

The information processing apparatus may be included in a UDM.

In some embodiments, the sixth receiving module 310, the addition module 320 and the sixth sending module 330 may be program modules; and after the program modules are executed by a processor, the above-mentioned operations of any modules may be implemented.

In other embodiments, the sixth receiving module 310, the addition module 320 and the sixth sending module 330 may be software and hardware combined modules; the software and hardware combined modules include, but are not limited to programmable arrays; and the programmable arrays include, but are not limited to field programmable arrays and/or complex programmable arrays.

In some further embodiments, the sixth receiving module 310, the addition module 320 and the sixth sending module 330 may be pure hardware modules; and the pure hardware modules include, but are not limited to application-specific integrated circuits.

In some embodiments, the sixth sending module 330 is further configured to perform at least one of
sending success information to the AMF in a case that the PINE information is successfully added into the network data of the PIN; or
sending failure information to the AMF in a case that the PINE information fails to be added into the network data of the PIN.

An embodiment of the present disclosure provides a communication device including:
a memory used for storing executable instructions for a processor; and
the processor respectively connected to the memory;
   wherein the processor is configured to execute the information processing method provided in any one of the above-mentioned technical solutions.
The processor may include various types of storage media which may be non-temporary computer storage media and may further memorize information stored thereon after the communication device is powered down.

Herein, the communication device includes a first device, a second device, an AMF or a UDM.

The processor may be connected to the memory through a bus, etc., and is used for reading executable programs stored on the memory, such as at least one of the methods shown in FIG. 2 to FIG. 9.

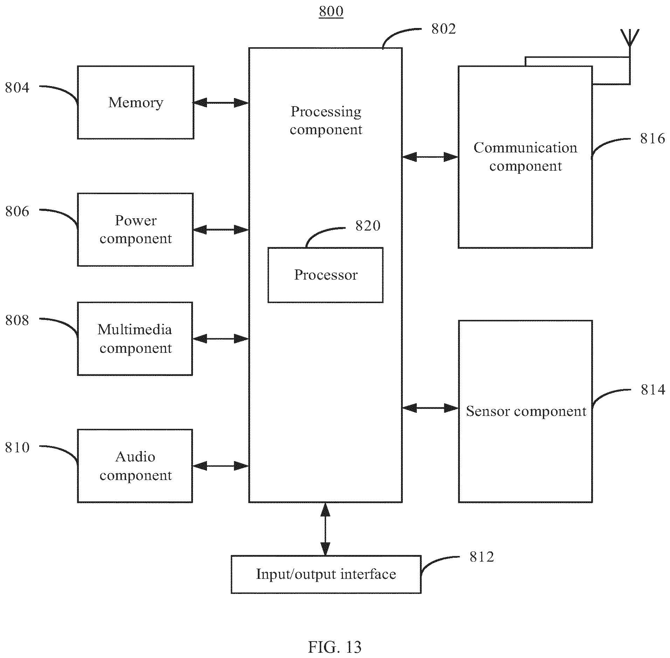

FIG. 13 is a block diagram of a UE 800 shown according to an exemplary embodiment. For example, the UE 800 may be a mobile phone, a computer, a digital broadcast user device, an information transceiving device, a game console, a tablet device, a medical device, a fitness equipment, a personal digital assistant, etc.

Refer to FIG. 13, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the UE 800, such as an operation related to display, telephone calling, data communication, camera operation and recording operation. The processing component 802 may include one or more processors 820 to execute instructions so as to complete all or parts of steps of the above-mentioned method. In addition, the processing component 802 may include one or more modules which facilitate interaction between the processing component 802 and other components. For example, the processing component 802 may include a multimedia module to facilitate interaction between the multimedia component 808 and the processing component 802.

The memory 804 is configured to store various types of data so as to support operations on the UE 800. Examples of the data include instructions for any application or method operated on the UE 800, contact data, telephone book data, information, pictures, videos, etc. The memory 804 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 provides power for the various components of the UE 800. The power supply component 806 may include a power management system, one or more power supplies, and other components related to the generation, management and power distribution of the UE 800.

The multimedia component 808 includes a screen providing an output interface between the UE 800 and a user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touching, sliding and gestures on the touch panel. The touch sensors can not only sense a boundary of a touching or sliding action, but also detect a duration and a pressure which are related to the touching or sliding operation. In some embodiments, the multimedia component 808 includes a front camera and/or a rear camera. When the UE 800 is in an operation mode, such as a shooting mode or a video mode, the front camera and/or the rear camera can receive external multimedia data. Each of the front camera and the rear camera may be a fixed optical lens system or have a focal length and optical zooming ability.

The audio component 810 is configured to output and/input an audio signal. For example, the audio component 810 includes a microphone (MIC). When the UE 800 is in an operation mode, such as a calling mode, a recording mode and a voice recognition mode, the MIC is configured to receive an external audio signal. The received audio signal may be further stored in the memory 804 or sent by the communication component 816. In some embodiments, the audio component 810 further includes a loudspeaker for outputting the audio signal.

The I/O interface 812 is an interface provided between the processing component 802 and a peripheral interface module, and the above-mentioned peripheral interface module may be a keyboard, a click wheel, buttons, etc. These buttons may include, but are not limited to a home button, a volume button, a start button, and a lock button.

The sensor component 814 includes one or more sensors for providing various aspects of state evaluation for the UE 800. For example, the sensor component 814 may detect an on/off state of the UE 800 and relative locations of the components, for example, the components are a display and a keypad of the UE 800. The sensor component 814 may also detect the position change of the UE 800 or one component of the UE 800, the existence or inexistence of contact between a user and the UE 800, a direction or acceleration/deceleration of the UE 800, and the temperature change of the UE 800. The sensor component 814 may include a proximity sensor configured to detect the existence of nearby objects when there is no any physical contact. The sensor component 814 may further include an optical sensor, such as a CMOS or CCD image sensor, used in imaging applications. In some embodiments, the sensor component 814 may further include an acceleration sensor, a gyroscope sensor, a magnetic sensor, a pressure sensor or a temperature sensor.

The communication component 816 is configured to facilitate wired or wireless communication between the UE 800 and other devices. The UE 800 may be accessed to a wireless network based on a communication standard, such as WiFi, 2G or 3G, or combinations thereof. In an exemplary embodiment, the communication component 816 receives a broadcast signal or broadcast-related information from an external broadcast management system through a broadcast channel. In an exemplary embodiment, the communication component 816 further includes a near field communication (NFC) module to promote short-range communication. For example, the NFC module may be implemented on the basis of a radio frequency identification (RFID) technology, an infrared data association (IrDA) technology, an ultra-wide band (UWB) technology, a Bluetooth (BT) technology, and other technologies.

In an exemplary embodiment, the UE 800 may be implemented by one or more application specific integrated circuits (ASIC), digital signal processors (DSP), digital signal processing devices (DSPD), programmable logic devices (PLD), field-programmable gate arrays (FPGA), controllers, micro-controllers, microprocessors or other electronic elements, and is used for executing the above-mentioned method.

In an exemplary embodiment, further provided is a non-temporary computer-readable storage medium including instructions, such as a memory 804 including instructions, and the above-mentioned instructions may be executed by the processor 820 of the UE 800 so as to generate the above-mentioned method. For example, the non-temporary computer-readable storage medium may be an ROM, a random access memory (RAM), a CD-ROM, a cassette, a floppy disk, an optical data storage device, etc.

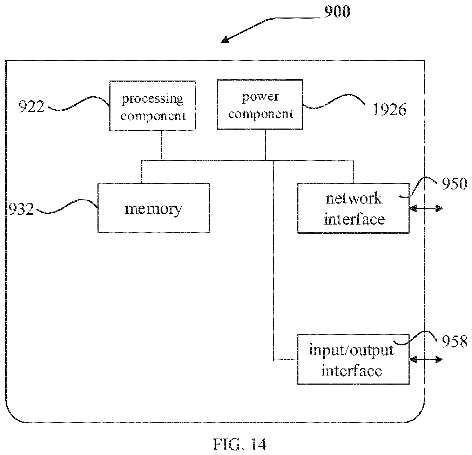

As shown in FIG. 14, an embodiment of the present disclosure shows a structure of an access device. For example, the communication device 900 may be provided as a network side device. The communication device may be the above-mentioned access network element and/or various network elements having network functions, etc.

Refer to FIG. 14, the communication device 900 includes a processing component 922 which further includes one or more processors and a memory resource represented by a memory 932 and used for storing instructions, such as applications, which may be executed by the processing component 922. The applications stored in the memory 932 may include one or more modules with each corresponding to a set of instructions. In addition, the processing component 922 is configured to execute the instructions so that the above-mentioned any method, such as any one of methods shown in FIG. 4 to FIG. 9, applied to the access device is executed.

The communication device 900 may further include a power supply component 926 configured to execute power supply management for the communication device 900, a wired or wireless network interface 950 configured to connect the communication device 900 to a network, and an input/output (I/O) interface 958. The communication device 900 may be based on an operating system, such as Windows Server TM, Mac OS XTM, UnixTM, LinuxTM, FreeBSDTM or the like, stored in the memory 932.

Those skilled in the art will readily envision other implementation solutions of the present disclosure after considering the specification and putting the present disclosure disclosed herein into practice. The present disclosure aims at covering any variations, purposes or adaptive changes of the present disclosure, and these variations, purposes or adaptive changes conform to general principles of the present disclosure and include common general knowledge or conventional technical means in the undisclosed technical field of the present disclosure. The specification and the embodiments are only regarded to be exemplary, and the true scope and spirits of the present disclosure are appointed by the following claims.

It should be understood that the present disclosure is not limited to precise structures which have been described above and shown in the accompanying drawings, and various modifications and alterations may be made without departing from the scope thereof. The scope of the present disclosure is only limited by the appended claims.

## Claims

1. A method for processing information performed by a first device, comprising:
receiving a network access request of a second device, wherein the network access request comprises device information of the second device;
determining, according to the device information, whether to allow the second device to access a personal Internet of Things network (PIN) to obtain a determination result; and
sending a network access response to the second device according to the determination result.

2. The method according to claim 1, wherein the method further comprises:
broadcasting PIN information; wherein the PIN information is used for the second device to discover the PIN managed by the first device.

3. The method according to claim 2, further comprising:
receiving a connection request sent by the second device after discovering the PIN information;
establishing a connection with the second device based on the connection request; and
wherein receiving the network access request of the second device comprises:
receiving the network access request of the second device on the connection established with the second device.

4. The method according to any one of claims 1 to 3, wherein the device information at least comprises a device identifier of the second device.

5. The method according to claim 4, wherein the device information further comprises at least one of
a PIN identifier used for the first device to determine a PIN requested to be accessed by the second device;
service information indicating a service supported by the second device;
an optional type identifier indicating a PIN element (PINE) type that the second device has a capability to be configured;
capability information at least indicating communication capability and/or management capability of the second device; or
a name of the second device.

6. The method according to any one of claims 1 to 5, wherein determining, according to the device information, whether to allow the second device to access the PIN to obtain the determination result comprises:
locally determining, according to the device information, whether to allow the second device to access the PIN to obtain the determination result;
or,
sending request information to a core network device according to the device information, and receiving response information returned by the core network device, wherein the response information is used for indicating whether the core network device allows the second device to access the PIN.

7. The method according to claim 6, wherein locally determining, according to the device information, whether to allow the second device to access the PIN to obtain the determination result comprises:
displaying the device information of the second device, detecting a return instruction for the device information, and determining whether to allow the second device to access the PIN according to the return instruction;
determining that the second device is allowed to access the PIN in a case that the device information of the second device is on a first list;
determining that the second device is not allowed to access the PIN in a case that the device information of the second device is outside the first list;
determining that the second device is prohibited from accessing the PIN in a case that the device information of the second device is on a second list; or
determining that the second device is allowed to access the PIN in a case that the device information of the second device outside the second list.

8. The method according to claim 6, further comprising:
assigning PINE information to the second device in a case that the first device determines that the second device is allowed to access the PIN;
or,
assigning PINE information to the second device in a case that the response information that the core network device determines that the second device is allowed to access the PIN is received;
or,
receiving PINE information assigned to the second device by the core network device;
wherein the PINE information at least comprises a PINE identifier.

9. The method according to claim 8, wherein the PINE information further comprises at least one of
an authorization type identifier indicating a PINE type that the second device is authorized;
validity time information indicating a duration that the second device is allowed to access the PIN;
role type information indicating that the second device is a member formally accessing the PIN or a visitor temporarily accessing the PIN;
permission information indicating a service permission by which the second device uses the PIN;
capability information indicating PIN capability of the second device;
a name of the second device; or
service information indicating a service supported by the second device.

10. The method according to claim 9, wherein the PINE type comprises at least one of:
a PEMC indicating that the second device is authorized with PIN network management capability;
a PEGC indicating that the second device is authorized with PIN gateway capability;
the PEMC and the PEGC indicating that the second device is authorized with the PIN network management capability and the PIN gateway capability; or
a PINE indicating that the second device is authorized to use the PIN.

11. The method according to claim 9, wherein sending the network access response to the second device according to the determination result comprises:
sending the network access response carrying the PINE information of the second device to the second device.

12. The method according to claim 11, further comprising:
sending an update request to the core network device, wherein the update request comprises the PINE information of the second device and the PIN information; and the PINE information is used for updating network data of the PIN.

13. The method according to claim 12, further comprising:
receiving an update notification returned by the core network device.

14. The method according to claim 13, wherein sending the network access response to the second device according to the determination result comprises:
sending the network access response to the second device according to the update notification and the determination result.

15. The method according to claim 14, wherein sending the network access response to the second device according to the update notification and the determination result comprises at least one of
sending an access acceptance response to the second device in a case that the second device is allowed to access the PIN and the update notification is an update success notification;
sending an access rejection response to the second device in a case that the second device is allowed to access the PIN and the update notification is an update failure notification; and
sending the access acceptance response to the second device in a case that the second device is allowed to access the PIN and the update notification is the update failure notification.

16. The method according to claim 1, wherein sending the network access response to the second device according to the determination result comprises at least one of:
in a case that the determination result indicates that the second device is allowed to access the PIN, sending an access acceptance response to the second network device after the determination result is generated; or
in a case that the determination result indicates that the second device is not allowed to access the PIN, sending an access rejection response to the second network device after the determination result is generated.

17. The method according to claim 1, wherein the network access response further comprises PIN information.

18. A method for processing information, performed by an access management function (AMF) in a core network device, comprising:
acquiring PINE information that a second device accesses a PIN; wherein the PINE information at least comprises a PINE identifier that the second device accesses the PIN;
sending the PINE information to a user data management (UDM);
receiving response information returned by the UDM; and
sending an update notification to a first device according to the response information.

19. The method according to claim 18, wherein acquiring the PINE information that the second device accesses the PIN comprises:
receiving an update request sent by the first device, wherein the update request comprises the PINE information;
or,
determining, according to device information of the second device, whether to allow the second device to access the PIN, and assigning the PINE information to the second device in a case that the second device is allowed to access the PIN.

20. The method according to claim 19, further comprising:
receiving request information sent by the first device, wherein the request information comprises the device information of the second device requesting to access the PIN;
determining, according to the device information of the second device, whether to allow the second device to access the PIN; and
sending response information to the first device according to a determination result of whether to allow the second device to access the PIN.

21. The method according to any one of claims 19 to 20, wherein sending the update notification to the first device according to the response information comprises at least one of:
sending an update success notification to the first device in a case that the response information indicates that PIN information is successfully added into network data of the PIN; and
sending an update failure notification to the first device in a case that the response information indicates that the PIN information fails to be added into the network data of the PIN.

22. The method according to claim 18, wherein the PINE information further comprises:
capability information of the second device, wherein the capability information indicates communication capability and/or management capability of the second device.

23. A method for processing information performed by a user data management (UDM) in a core network device, comprising:
receiving PIN element (PINE) information and personal Internet of Things network (PIN)information sent by an access management function (AMF);
adding the PINE information into network data of a PIN indicated by the PIN information; and
sending response information to the AMF according to a determination of whether the PINE information is successfully added into the network data of the PIN.

24. The method according to claim 23, wherein sending the response information to the AMF according to the determination of whether the PINE information is successfully added into the network data of the PIN comprises at least one of
sending success information to the AMF in a case that the PINE information is successfully added into the network data of the PIN; or
sending failure information to the AMF in a case that the PINE information fails to be added into the network data of the PIN.

25. An apparatus for processing information, comprising:
a first receiving module configured to receive a network access request of a second device, wherein the network access request comprises device information of the second device;
a first determination module configured to determine, according to the device information, whether to allow the second device to access a personal Internet of Things network (PIN)to obtain a determination result; and
a first sending module configured to send a network access response to the second device according to the determination result.

26. The apparatus according to claim 25, further comprising:
a broadcasting module configured to broadcast PIN information; wherein the PIN information is used for the second device to discover the PIN managed by a first device.

27. The apparatus according to claim 26, further comprising:
a connecting module configured to receive a connection request sent by the second device after discovering the PIN information;
an establishing module configured to establish a connection with the second device based on the connection request; and
the first receiving module configured to receive the network access request of the second device on the connection established with the second device.

28. The apparatus according to any one of claims 25 to 27, wherein the device information at least comprises a device identifier of the second device.

29. The apparatus according to claim 28, wherein the device information further comprises at least one of
a PIN identifier used for the first device to determine a PIN requested to be accessed by the second device;
service information indicating a service supported by the second device;
an optional type identifier indicating a PINE type of a PIN as which the second device has a capability to be configured;
capability information at least indicating communication capability and/or management capability of the second device; or
a name of the second device.

30. The apparatus according to any one of claims 25 to 29, wherein the first determination module is configured to locally determine, according to the device information, whether to allow the second device to access the PIN to obtain the determination result;
or,
send request information to a core network device according to the device information, and receive response information returned by the core network device, wherein the response information is used for indicating whether the core network device allows the second device to access the PIN.

31. The apparatus according to claim 30, wherein the first determination module is configured to perform at least one of: displaying the device information of the second device, and detecting a return instruction for the device information, and determining whether to allow the second device to access the PIN according to the return instruction;
determining that the second device is allowed to access the PIN in a case that the device information of the second device is on a first list;
determining that the second device is not allowed to access the PIN in a case that the device information of the second device is outside the first list;
determining that the second device is prohibited from accessing the PIN in a case that the device information of the second device is on a second list; or
determining that the second device is allowed to access the PIN in a case that the device information of the second device outside the second list.

32. The apparatus according to claim 31, further comprising:
a first assignment module configured to assign PINE information to the second device in a case that the first device determines that the second device is allowed to access the PIN;
or,
a second assignment module configured to assign PINE information to the second device in a case that the response information that the core network device determines that the second device is allowed to access the PIN is received;
or,
a second receiving module configured to receive PINE information assigned to the second device by the core network device;
wherein the PINE information at least comprises a PINE identifier.

33. The apparatus according to claim 32, wherein the PINE information further comprises at least one of:
an authorization type identifier indicating a PINE type that the second device is authorized;
validity time information indicating a duration that the second device is allowed to access the PIN;
role type information indicating that the second device is a member formally accessing the PIN or a visitor temporarily accessing the PIN;
permission information indicating a service permission by which the second device uses the PIN;
capability information indicating PIN capability of the second device;
a name of the second device; or
service information indicating a service supported by the second device.

34. The apparatus according to claim 33, wherein the PINE type comprises at least one of:
a PEMC indicating that the second device is authorized with PIN network management capability;
a PEGC indicating that the second device is authorized with PIN gateway capability;
the PEMC and the PEGC indicating that the second device is authorized with the PIN network management capability and the PIN gateway capability; or
a PINE indicating that the second device is authorized to use the PIN.

35. The apparatus according to claim 33, wherein the first sending module is configured to send the network access response carrying the PINE information of the second device to the second device.

36. The apparatus according to claim 35, further comprising:
a second sending module configured to send an update request to the core network device, wherein the update request comprises: the PINE information of the second device and the PIN information; and the PINE information is used for updating network data of the PIN.

37. The apparatus according to claim 36, further comprising:
a third receiving module configured to receive an update notification returned by the core network device.

38. The apparatus according to claim 37, wherein the first sending module is configured to send the network access response to the second device according to the update notification and the determination result.

39. The apparatus according to claim 38, wherein the first determination module is configured to perform at least one of:
sending an access acceptance response to the second device in a case that the second device is allowed to access the PIN and the update notification is an update success notification;
sending an access rejection response to the second device in a case that the second device is allowed to access the PIN and the update notification is an update failure notification; and
sending the access acceptance response to the second device in a case that the second device is allowed to access the PIN and the update notification is the update failure notification.

40. The apparatus according to claim 25, wherein the first sending module is configured to perform at least one of:
in a case that the determination result indicates that the second device is allowed to access the PIN, sending an access acceptance response to the second network device after the determination result is generated; or
in a case that the determination result indicates that the second device is not allowed to access the PIN, sending an access rejection response to the second network device after the determination result is generated.

41. The apparatus according to claim 25, wherein the network access response further comprises PIN information.

42. An apparatus for processing information, wherein the apparatus comprises:
an acquisition module configured to acquire PINE information that a second device accesses a PIN; wherein the PINE information at least comprises a PINE identifier that the second device accesses the PIN;
a third sending module configured to send the PINE information to a user data management (UDM);
a fourth receiving module configured to receive response information returned by the UDM; and
a fourth sending module configured to send an update notification to a first device according to the response information.

43. The apparatus according to claim 42, wherein the acquisition module is configured to receive an update request sent by the first device, wherein the update request comprises the PINE information; or, determine, according to device information of the second device, whether to allow the second device to access the PIN, and assign the PINE information to the second device in a case that the second device is allowed to access the PIN.

44. The apparatus according to claim 43, further comprising:
a fifth receiving module configured to receive request information sent by the first device, wherein the request information comprises the device information of the second device requesting to access the PIN;
a second determination module configured to determine, according to the device information of the second device, whether to allow the second device to access the PIN; and
the fourth sending module configured to send response information to the first device according to a determination result of whether to allow the second device to access the PIN, wherein the response information is used for the first device to assign the PINE information to the second device when the second device is allowed to access the PIN.

45. The apparatus according to any one of claims 42 to 44, wherein the fourth sending module is configured to perform at least one of:
sending an update success notification to the first device in a case that the response information indicates that PIN information is successfully added into network data of the PIN; and
sending an update failure notification to the first device in a case that the response information indicates that the PIN information fails to be added into the network data of the PIN.

46. The apparatus according to claim 42, wherein the PINE information further comprises:
capability information of the second device, wherein the capability information indicates communication capability and/or management capability of the second device.

47. An apparatus for processing information, comprises:
a sixth receiving module configured to receive PIN element (PINE) information and personal Internet of Things network (PIN)information sent by an access management function (AMF);
an addition module configured to add the PINE information into network data of a PIN indicated by the PIN information; and
a sixth sending module configured to send response information to the AMF according to a determination of whether the PINE information is successfully added into the network data of the PIN.

48. The apparatus according to claim 47, wherein the sixth sending module 330 is further configured to perform at least one of
sending success information to the AMF in a case that the PINE information is successfully added into the network data of the PIN; or
sending failure information to the AMF in a case that the PINE information fails to be added into the network data of the PIN.

49. A communication device, comprising a processor, a transceiver, a memory, and executable programs stored in the memory and capable of running on the processor, wherein the processor, when running the executable programs, executes the method provided according to any one of claims 1 to 17, claims 18 to 22, or claims 23 to 24.

50. A computer storage medium having executable programs stored thereon; and after executing the executable programs, a process being capable of implementing the method provided according to any one of claims 1 to 17, claims 18 to 22, or claims 23 to 24.
